**Europäisches Patentamt**

**European Patent Office**

**Office européen des brevets**

(19)

(11) Veröffentlichungsnummer: **0 193 713**
A2

# EUROPÄISCHE PATENTANMELDUNG

(12)

(21) Anmeldenummer: **86100552.8**

(22) Anmeldetag: **17.01.86**

(51) Int. Cl.⁴: **H 04 M 1/02**

(30) Priorität: **02.03.85 DE 3507480**

(43) Veröffentlichungstag der Anmeldung: **10.09.86** Patentblatt **86/37**

(84) Benannte Vertragsstaaten: **AT BE IT**

(71) Anmelder: **Telefonbau und Normalzeit GmbH, Mainzer Landstrasse 128-146 Postfach 4432, D-6000 Frankfurt (Main) (DE)**

(72) Erfinder: **Bock, Hans-Jürgen, Dipl.-Ing., Gutenbergstrasse 21, D-6100 Darmstadt (DE)**
Erfinder: **Bernhard, Reiner, Dipl.-Ing., Am Tiefen Born 3, D-6367 Karben 3 (DE)**

(54) **Endgerät für eine digitale Fernmeldevermittlungsanlage.**

(57) Am Endgerät einer digitalen Fernmeldevermittlungsanlage, welches eine Eingabetastatur, eine Wähl- und Bedientastatur und eine Anzeigevorrichtung in Form eines Bildschirms aufweist, ist eine Taste vorgesehen, welche die Anzeige von Informationen auf der Anzeigevorrichtung bei gleichzeitigem Bestehen einer Fernsprech- und einer Datenverbindung steuert. Erfolgt die Anzeige der Informationen, die über die eine Verbindung übertragen werden, so werden die Informationen der anderen Verbindung zwischengespeichert, so daß nach der Umschaltung jeweils die aktuellen Informationen angezeigt werden.

**EP 0 193 713 A2**

0193713

Telefonbau und Normalzeit GmbH, 6000 Frankfurt am Main,
Mainzer Landstrasse 128 - 146

Endgerät für eine digitale Fernmeldevermittlungsanlage

Die Erfindung betrifft ein Endgerät für eine digitale
Fernmeldevermittlungsanlage mit einer, einen Speicher aufweisenden Steuereinrichtung, einer Eingabe-, Bedien- und
einer Wähltastatur, einer Anzeigevorrichtung in Form
eines Bildschirms und einem Analog/Digital- bzw. Digital/
Analog-Wandler, an welchem eine Sprechkreisschaltung mit
Handapparat angeschlossen ist, wobei auf dem Bildschirm
der Anzeigevorrichtung eine Anzeige fernsprechverbindungsbezogener Informationen oder Dateninformationen möglich
ist.

Ein derartiges Endgerät ist bereits bekannt. So wird in der
DE-OS 32 28 210 und 33 07 375 ein Sichtschirmtelefon beschrieben, dessen Bildschirm entweder zur Anzeige von
·Bildschirmtextinformationen oder zur Anzeige fernsprechverbindungsbezogener Informationen wie beispielsweise Rufnummern,
Gebühreninformationen, usw. verwendet wird.

Ein derartiges Endgerät bietet dem Benutzer den Zugang zu
mehreren Diensten (Fernsprechverbindungen, Datenverbindungen,
usw.) und außerdem einen größeren Komfort, da über die
Anzeigevorrichtung der Benutzer umfassender fernsprechverbindungsbezogen informiert werden kann, als dies bisher
mit Hörzeichen möglich war. Die Ausstattung eines derartigen
Endgeräts mit einer Vielzahl von Funktionen bringt jedoch
den Nachteil mit sich, daß dessen Bedienung immer komplizierter
wird.

Die Aufgabe der Erfindung besteht nun darin, ein Endgerät anzugeben, dessen Bedienung bezüglich der Anzeigevorrichtung erleichtert ist, insbesondere dann, wenn gleichzeitig eine Fernsprech- und eine Daten-Verbindung besteht.

Diese Aufgabe wird dadurch gelöst, daß zur Einleitung einer ersten Verbindung eine erste Taste und zur Einleitung einer zweiten Verbindung eine zweite Taste vorgesehen ist, und daß bei gleichzeitigem Bestehen beider Verbindungen durch abwechselnde Betätigung einer dritten Taste der Bildschirm entweder zur Anzeige der über die erste oder zweite Verbindung übermittelten Informationen verwendet wird, wobei jeweils die nicht angezeigten Informationen in einem Speicher des Endgeräts abgelegt werden und ständig aktualisierbar sind.

Während des gleichzeitigen Bestehens einer Fernsprech-Verbindung und einer Daten-Verbindung kann der Teilnehmer durch Betätigen dieser dritten Taste die Anzeige derart steuern, daß entweder die vermittlungstechnischen Informationen oder die Dateninformationen angezeigt werden. Die Umschaltung hat jedoch keinen Einfluß auf die Verbindungen, diese bleiben weiterhin bestehen, wobei in beiden Fällen die übermittelten Informationen in einem Speicher abgelegt und aktualisiert werden, damit beim Umschalten der Anzeige stets die neuesten Informationen angezeigt werden.

Eine Weiterbildung der Erfindung besteht darin, daß bei einer Anzeige der über eine der beiden Verbindungen übermittelten Informationen ein Bereich des Bildschirms zur Anzeige bestimmter verbindungsbezogener Informationen reserviert bleibt.

Hierzu kann beispielsweise die unterste Textzeile des Bildschirms herangezogen werden, wobei die übrige Anzeigefläche des Bildschirms zur Anzeige von Daten-Informationen benutzt wird.

Weitere Vorteile ergeben sich aus den Unteransprüchen.

- 3 -   0193713

Die Erfindung wird anhand eines Ausführungsbeispiels
näher erläutert, welches in der Zeichnung dargestellt ist.
Es zeigt:
Fig. 1 eine Ansicht des Endgeräts und
Fig. 2 ein Blockschaltbild des Endgeräts.

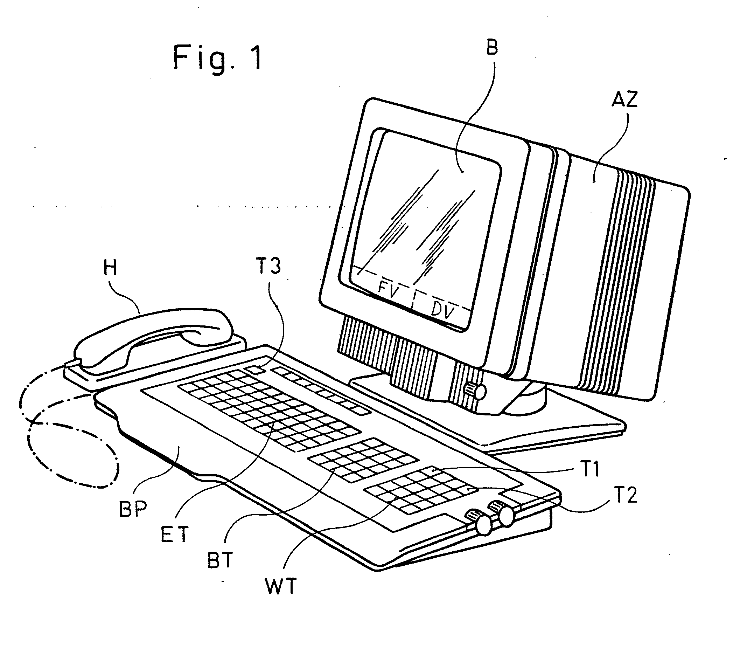

Das Endgerät besteht aus einem Bedienpult BP, einem
Telefon-Handapparat H und einer Anzeigevorrichtung AZ mit
einem Bildschirm B. Das Bedienpult BP weist eine Eingabetastatur ET zur Eingabe von Buchstaben, Ziffern und Zeichen,
eine Bedientastatur BT zur Bedienung des Endgeräts und einer
Wähltastatur WT zur Eingabe von Rufnummern zur Steuerung
des Verbindungsaufbaus auf (Fig. 1). Die Bedientastatur
BT und die Wähltastatur WT können auch vereinigt sein.

Es wird nun davon ausgegangen, daß der Teilnehmer zunächst
eine Verbindung mit einer elektronsichen Datenverarbeitungsanlage wünscht. Er betätigt zunächst die Taste T1, hiermit
wird der Wunsch zum Aufbau einer Verbindung zur einer
elektronischen Datenverarbeitungsanlage gekennzeichnet.
Durch Eingabe der Rufnummer über die Wähltastatur WT
werden vom Endgerät selbsttätig Datenworte an die Fernmeldevermittlungsanlage ausgesendet, welche die Rufnummer der
Datenverarbeitungsanlage enthalten. Die Fernmeldevermittlungsvermittlungsanlage sendet verbindungsbezogene Informationen,
welche auf dem Bildschirm B im Feld DV angezeigt werden.
Hierunter fällt beispielsweise die Anzeige, ob ein Verbindungsweg frei ist oder nicht und ob die elektronsiche Datenverarbeitungsanlage frei ist oder augenblicklich nicht benutzt
werden kann.

Durch die Betätigung der Taste T1 wurde in der Steuereinrichtung
des Endgeräts eine Bitstelle oder eine Kippstufe gesetzt,
welche veranlaßt, daß die Anzeigevorrichtung AZ mit der
Datenverbindung verbunden wird. Zur Anzeige der von der
elektronischen Datenverarbeitungsanlage übermittelten
Informationen dient die übrige Anzeigefläche des Bildschirms B.

Es wird nun angenommen, daß der Teilnehmer im Zusammenhang

- 4 -

0193713

mit der Verbindung mit der elektronischen Datenverarbeitungsanlage eine gleichzeitige Fernsprechverbindung zu einem
anderen Teilnehmer wünscht. Es wird davon ausgegangen,
daß das Endgerät eine Zielwahleinrichtung aufweist, deren
Rufnummern und Namen auf dem Bildschirm B anzeigbar sind.
Zur Umschaltung der Anzeige ist die Taste T3 zu betätigen,
welche die bereits angesprochene Bitstelle oder Kippstufe
steuert, so daß nunmehr auf dem übrigen Bildschirm B
die Zielwahlinformationen erscheinen. Durch Betätigung
der Taste T2 wird der Verbindungsaufbau für eine Fernsprechverbindung eingeleitet. Durch die anschließende Betätigung
der Zielwahltaste des gewünschten Teilnehmeranschlusses
wird die Aussendung der Rufnummer desselben veranlaßt.
Diese wird in der Fernmeldevermittlungsanlage ausgewertet
und anschließend eine Verbindung zu dem gewünschten Teilnehmeranschluß hergestellt.

Bei der Anzeige auf dem Bildschirm B muß es sich nun nicht
unbedingt um eine Anzeige von Zielwahlinformationen handeln,
vielmehr kann durch entsprechende Eingabe über die
Eingabetastatur ET auch ein Auszug aus dem "Telefonbuch"
angezeigt werden, wobei der gewünschte Teilnehmeranschluß
dann durch Eingabe der Rufnummer über die Wähltastatur WT
angewählt wird. Sowohl die Zielwahlinformationen als auch
die Informationen für die Anzeige des "Telefonbuchs"
können entweder im Endgerät selbst oder auch in der
Fernmeldevermittlungsanlage eingespeichert sein, wobei im
letzteren Fall eine entsprechende Übertragung der gewünschten
Informationen an das Endgerät notwendig ist.

Der Teilnehmer kann nun während der Fernsprechverbindung wieder auf die Anzeige der aus der elektronischen Datenverarbeitungsanlage übermittelten Dateninformationen umschalten und zwar durch Betätigung der Taste T3. Durch die erneute Betätigung der Taste T3 kann auch eine erneute Anzeige vermittlungstechnischer Informationen veranlaßt werden, wobei eine neue Fernsprechverbindung beispielsweise eine Rückfrageverbindung möglich ist. Ebenso kann die bestehende Datenverbindung ausgelöst und eine andere Datenverbindung beispielsweise im Rahmen des Bildschirmtextes aufgebaut werden.

Die Auslösung der Fernsprech- oder der Daten-Verbindung erfolgt durch Betätigung hierfür vorgesehener Trenntasten. Weiterhinn sind entsprechende Tasten für die Rückfrage, die Wahlwiederholung, usw. vorhanden.

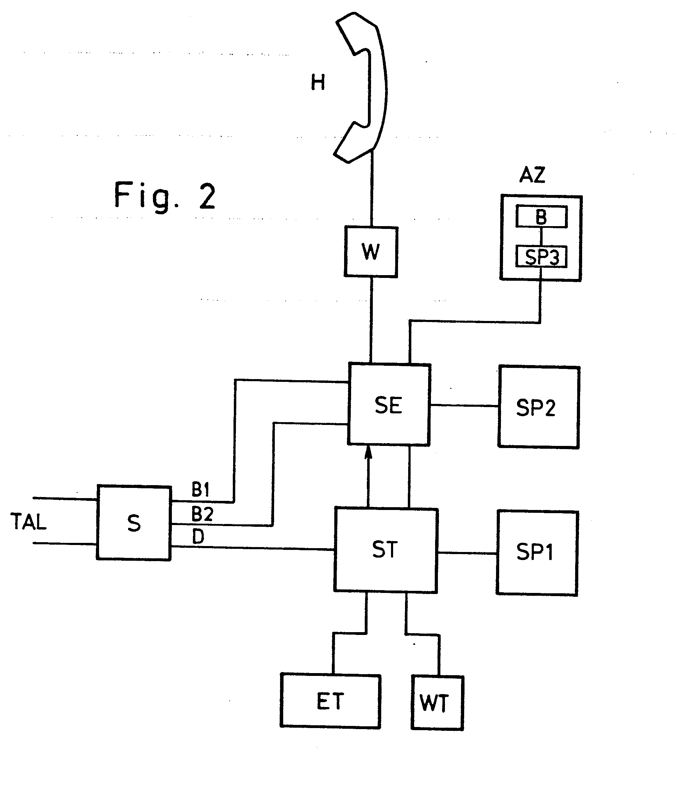

Bei dem in Fig. 2 gezeigten Blockschaltbild eines Endgeräts wird davon ausgegangen, daß über die Teilnehmeranschlußleitung TAL zwei Informations-Kanäle und ein Signalisierungskanal in beiden Richtungen übertragen werden. In der Schnittstelleneinrichtung S erfolgt die Aufspreizung der über die einzelnen Kanäle übertragenen Informationen in der Empfangsrichtung bzw. die Zusammenführung dieser Informationen in der Senderichtung. Die Informtionen der Informationskanäle wird über die Leitungen B1 und B2 und die Information des Signalisierungskanals auf der Leitung D übertragen, wobei die Leitung D an der Steuereinrichtung ST des Endgeräts angeschlossen ist. Die Leitungen B1 und B2 sind an einer
Schalteinrichtung SE angeschlossen, über welche die genannten Kanäle wahlweise mit dem Analog/Digital- bzw.
Digital/Analog-Wandler, mit der Anzeigevorrichtung AZ oder
mit einem Speicher SP2 verbindbar sind. Mit der Steuereinrichtung ST ist ein Speicher SP1, eine Eingabetastatur ET
und eine Bedien- und Wähltastatur WT verbunden.

Der Speicher SP1 kann nun beispeilsweise eine Telefonbuch,
eine Zielwahltabelle, ein Notizbuch, eine Weckeinrichtung,
eine Uhr, usw. enthalten. Durch Betätigung von Eingabe-
oder Bedientasten kann ein Teil des Inhalts oder auch der
gesamte Inhalt des Speicher SP1 auf dem Bildschirm B der
Anzeigevorrichtung AZ angezeigt werden, indem der Speicherinhalt auf Veranlassung der Steuereinrichtung ST ausgelesen
und an die Anzeigevorrichtung AZ übertragen wird. Neben
dem Bildschirm B weist die Anzeigevorrichtung AZ auch einen
Speicher SP3 auf, welcher als Bildwiederholspeicher ausgebildet ist.

Anknüpfend an das oben erläuterte Beispiel einer Verbindungsherstellung wird angenommen, daß zunächst eine Verbindung
vom Endgerät zu einer elektronischen Datenverarbeitungsanlage
hergestellt werden soll. Hierzu wird Informationskanal B1
verwendet und über die Schalteinrichtung SE mit der Anzeigevorrichtung AZ verbunden. Es ist auch denkbar, den Speicher SP2
in diese Verbindung einzuschleifen bzw. in diesem die
ankommenden Informationen parallel einzuschreiben.

Für die Sprechverbindung wird nun der zweite Informationskanal belegt und der Wandler W über die Schalteinrichtung SE
mit dem Kanal B2 verbunden. Benötigt nun der Teilnehmer die
Anzeigevorrichtung AZ zur Anzeige beispielsweise des Telefonbuchs oder einer Zielwahltabelle, so wird die Schalteinrichtung
SE durch einen entsprechenden Tastendruck über die Steuereinrichtung ST veranlaßt, die Anzeigevorrichtung AZ vom
Informationskanal B1 abzutrennen und mit dem Speicher SP1
bzw. der Steuereinrichtung ST zu verbinden, damit der Speicherinhalt oder ein Teil desselben des Speichers SP1 ausgelesen
und der Anzeigevorrichtung AZ zugeführt werden kann. Der Speicher SP2, welcher im Rahmen der Informationsübertragung über den Informationskanal B1 ständig auf dem
neuesten Stand gehalten ist, kann nach Umschalten der
Anzeige sofort mit der Anzeigevorrichtung AZ verbunden werden,
wodurch sichergestellt ist, daß die Anzeige den Informationsstand behält, den sie eingenommen hätte, wenn die Anzeige
nicht abgeschaltet worden wäre.

Die Aktualisierung der Anzeige ist jedoch nicht nur auf
die Datenübertragung beschränkt, diese kann vielmehr auch
auf die Übertragung vermittlungstechnischer Informationen
wie beispielsweise für die Anzeige des "Telefonbuchs"
angewendet werden, insbesondere dann, wenn diese aus der
Vermittlungsanlage über einen Informationskanal zum Endgerät
übertragen werden.

Es wird noch darauf hingewiesen, daß zum Aufbau eine. Fernsprechverbindung während einer bestehenden Datenverbindung die
Anzeige zur Darstellung vermittlungstechnischer Informationen
nicht unbedingt umgeschaltet werden muß. Dies ist nur der Fall,
wenn zu diesem Zweck eine entsprechende Anzeige benötigt wird,
da die der Fernsprechverbindung betreffenden Informationen im
Feld FV des Bildschirms B angezeigt werden (Fig. 1). Die
Felder FV und DV dienen zur Anzeige verbindungsbezogener
Informationen und zwar das Feld FV für die erste Verbindung und das Feld DV für die andere Verbindung. Bei einer
Anzeige vermittlungstechnischer Informationen auf dem gesamten
Bildschirm B entfallen die Felder FV und DV, da diese
Informationen ausführlicher darstellbar sind.

Selbstverständlich können auch gleichzeitig zwei Daten- oder
Fernsprechverbindungen bestehen, oder jeweils eine derartige
Verbindung parallel zu einer derartigen bestehenden Verbindung
aufgebaut werden.

P 3946
Fs/we
8.2.85

Telefonbau und Normalzeit GmbH, 6000 Frankfurt am Main,
Mainzer Landstrasse 128 - 146

Gerät für eine digitale Fernmeldevermittlungsanlage

P a t e n t a n s p r ü c h e

1.  Endgerät für eine digitale Fernmeldevermittlungsanlage
mit einer einen Speicher aufweisenden Steuereinrichtung,
einer Eingabe-, Bedien- und Wähltastatur, einer Anzeigevorrichtung in Form eines Bildschirms und einem
Analog/Digital- bzw. Digital/Analog-Wandler, an welchem
eine Sprechkreisschaltung mit Handapparat angeschlossen
ist, wobei auf dem Bildschirm der Anzeigevorrichtung
eine Anzeige fernsprechverbindungsbezogener Informationen
oder Dateninformationen möglich ist,
dadurch gekennzeichnet,
daß zur Einleitung einer ersten Verbindung eine
erste Taste (T1) und zur Einleitung einer zweiten Verbindung
eine zweite Taste ( T2) vorgesehen ist, und daß bei
gleichzeitigem Bestehen beider Verbindungen durch
abwechselnde Betätigung einer dritten Taste (T3) der
Bildschirm entweder zur Anzeige der über die erste oder
die zweite Verbindung.
        übermittelten Informationen verwendet wird,
wobei jeweils die nicht angezeigten Informationen in
einem Speicher des Endgeräts abgelegt werden und ständig
aktualisierbar sind.

2.  Endgerät nach Anspruch 1,
dadurch gekennzeichnet,
daß bei einer Anzeige der über eine der beiden Verbindungen über-

0193713

(FV, DV)

mittelten Informationen ein Bereich des Bildschirms (B) zur Anzeige bestimmter, verbindungsbezogener Informationen reserviert bleibt.

3. Endgerät nach Anspruch 1 oder 2, dadurch gekennzeichnet, daß bei Bestehen nur einer Datenverbindung und der damit verbundenen Anzeige der übermittelten Informationen durch die Betätigung der dritten Taste (T3) eine Anzeige von vermittlungstechnischen Informationen erfolgt, welche im Speicher (SP1) des Endgeräts abgelegt sind.

4. Endgerät nach Anspruch 1, dadurch gekennzeichnet, daß die erste (T1) und die zweite (T2) Taste einen Teil der Wähltastatur (WT) bildet.

5. Endgerät nach einem der Ansprüche 1 bis 3, dadurch gekennzeichnet, daß die dritte Taste (T3) einen Teil der Eingabetastatur (ET) bildet.

6. Endgerät nach Anspruch 5, dadurch gekennzeichnet, daß die dritte Taste (T3) am äußeren linken oberen Rand der Eingabetastatur (ET) angebracht ist.

7. Schaltungsanordnung für ein Endgerät nach einem der Ansprüche 1 bis 6, dadurch gekennzeichnet, daß ein zweiter Speicher (SP2) vorgesehen ist, welcher mit einer von der Steuereinrichtung (ST) gesteuerten Schalteinrichtung (SE) verbunden ist und über die Schalteinrichtung die wahlweise Verbindung der Fernsprechverbindung oder der Datenverbindung mit der Anzeigevorrichtung (AZ) bzw. mit dem zweiten Speicher (SP2) bzw. die Verbindung desselben mit der Anzeigevorrichtung (AZ) möglich ist, wobei durch die Tastenbetätigung der dritten Taste (T3) in der Steuereinrichtung (ST) ein Merkbit oder eine Kippstufe gesetzt bzw. zurückgesetzt wird.

0193713

1/2

Fig. 1

TN P 3946

0193713

2/2

Fig. 2